**Europäisches Patentamt**

(19) **European Patent Office**

**Office européen des brevets**

(11) Publication number : **0 426 703 B1**

# (12) EUROPEAN PATENT SPECIFICATION

(45) Date of publication of patent specification :
28.04.93 Bulletin 93/17

(51) Int. Cl.⁵ : **F16L 9/127**, C08L 27/06

(21) Application number : **89907838.0**

(22) Date of filing : **07.07.89**

(86) International application number :
**PCT/NL89/00056**

(87) International publication number :
**WO 90/00696 25.01.90 Gazette 90/03**

(54) **PRESSURE-TUBE OF VINYLCHLORIDE PLASTIC.**

(30) Priority : **13.07.88 NL 8801788**

(43) Date of publication of application :
**15.05.91 Bulletin 91/20**

(45) Publication of the grant of the patent :
**28.04.93 Bulletin 93/17**

(84) Designated Contracting States :
**AT BE CH DE FR GB IT LI LU NL SE**

(56) References cited :
**EP-A- 044 159**
**EP-A- 0 042 091**
**EP-A- 0 102 722**

(56) References cited :
**EP-A- 0 136 540**
**EP-A- 0 169 451**
**EP-A- 0 184 379**
**EP-A- 0 224 913**
**FR-A- 2 256 201**

(73) Proprietor : **WAVIN B.V.**
**Händellaan 251**
**NL-8031 EM Zwolle (NL)**

(72) Inventor : **NAAKTGEBOREN, Aart, Jacob**
**Langewijk 109**
**NL-7701 AD Dedemsvaart (NL)**

(74) Representative : **Barendregt, Frank, Drs. et al**
**EXTERPATENT B.V. P.O. Box 3241**
**NL-2280 GE Rijswijk (NL)**

EP 0 426 703 B1

## Description

The invention relates primarily to a tube of thermoplastic material based on a vinyl chloride polymer.

Such tubes are produced on a large scale by extruding polyvinyl chloride to which additives which have been extensively described in the relevant literature have been added in connection with processing and later use.

The requirement that such tubes have a good fracture toughness in order to reduce the risk of a tube fracture when such a tube is used in the buried state as a transport pipe for, for example, pressurized water, is being imposed to an increasing extent in the use of such tubes manufactured from plastic material.

British Standard Specification BS 3505: 1986 discloses an instruction for measuring the fracture toughness of a tube made of unplasticized polyvinyl chloride. In the measurement procedure described therein, a distinction is made between the fracture toughness as such (Kc) and the fracture toughness which has been corrected for dimensional effects of the sample (Kic).

In relation to the performance of the measurement, reference is made to the British Standards Institution document described above.

The object of the present invention is to provide a tube of thermoplastic material based on vinyl chloride which has an increased fracture toughness, as a result of which such a tube becomes suitable for use as a pressure pipe without at the same time, however, making use of exceptionally large wall thicknesses.

The applicant has carried out extensive experiments in order to establish the influence of the plastics composition and the process conditions in the manufacturing of objects of PVC on the KiC value. It has been found that in general the KiC value of tubes which have been manufactured from a conventional PVC composition will be sufficiently high in order to meet the above mentioned British Standard.

In the measurement of the KiC value according to this standard it appears, however, that the conventional PVC compositions show a substantially brittle fracture behaviour which puts the use of PVC tubes for transporting pressurised gaseous or liquid media at a disadvantage as this behaviour renders the use of high safety factors for determining the wall thickness necessary.

The present invention therefore has as an objective to render possible the use of tubes out of thermoplastic material on the basis of a vinylchloride polymer for transporting pressurised media with an increased safety with respect to fracture.

Surprisingly it has now appeared that such an application is possible if to the plastic from which the tube is manufactured, in addition to optional other conventional additives, 0,3-4 wt.% of a fracture behaviour influencing agent is added by which the fracture behaviour upon determination of the fracture toughness of the finished tube appears to be substantially ductile in comparison to the fracture behaviour of a tube made of the same plastic to which said agent has not been added and whereby the finished tube shows a fracture behaviour which is substantially brittle. whereby the agent has been chosen from chlorinated polyethylene, chlorinated polyethylene-vinyl chloride graft polymers, ethylene-vinyl acetate copolymers, ethylene-vinyl acetate/ vinyl chloride graft copolymers, polyacrylic acid ester/ vinyl chloride graft polymers, acrylic ester/methyl methacrylate graft polymers, methyl methacrylate-butadiene-styrene graft polymers, acrylonitrile - butadiene-styrene terpolymers etc.

In the investigations carried out by applicant it appeared that the agents which influence the fracture behaviour belong inter alia to a group of agents which improve the notched impact strength which are known per sé for example from EP-A-0 224 913.

The use of such agents has however only a measurable effect with use of a content of at least about 5% as has been described in Polyvinylchlorid; Kunststoff Handbuch (2), 1985 (c) 1986, Carl Hanser Verlag p.p. 714, 715.

Upon addition of an agent of the above described type which influences the fracture behaviour in the amount indicated to the PVC composition of which a tube is manufactured it appears that the fracture behaviour in the determination of the fracture toughness according to the earlier mentioned British Standard specification is changed from substantially brittle to substantially ductile while at the same time no or only a very slight decrease in yield strength occurs while the KiC value remains sufficiently high, i.e. greater than about 4.

This implies that the use of such tubes for transportation of pressurised media in gaseous or liquid form is possible with an increased safety with respect to fracture.

It may even be possible, by the occurrence of a ductile fracture, to use lower safety coefficients such that PVC tubes may become available for pressure use having a smaller wall thickness than is now conventional under the same conditions.

In respect of the amount of agent which influences the fracture behaviour it is observed that approximately two ranges of addition may be distinguished:

| Addition % | Fracture | Yield strength |
|---|---|---|
| 0,5-1 wt.% | substantially ductile | about normal |
| 1  -3 wt.% | ductile | slight decrease |

The invention is also embodied in a pressure pipe for transporting pressurised media which pipe is manufactured from plastics tube of thermoplastic material on the basis of a vinylchloride polymer which is characterised in that to the plastic, in addition to other conventional additives 0,3-4 wt.% of an agent which influences the fracture behaviour is added by which the fracture behaviour, upon determining the fracture toughness of the finished tube, is substantially ductile in comparison to the fracture behaviour of a tube made same plastic to which said agent as not been added and whereby the finished tube shows a fracture behaviour which is substantially brittle.

The amount of agent which influences the fracture behaviour amounts in particular to 0,5-1 wt.% with respect to the total amount of plastic for obtaining a substantially ductile fracture and preferably 1-3 wt.% for obtaining a 100% ductile fracture upon use of for example acrylate (PVC-A).

The invention comprises also a tube for use in a pressure pipe has been described hereinbefore. The tube is made from a vinylchloride polymer and this plastic comprises 0,3-4 wt.% of an agent which influences the fracture behaviour, such that a substantially ductile fracture is observed, the agent being a notched impact strength influencing agent.

The invention will now be illustrated with use of an example.

Fracture toughness tests were carried out with tunes of PVC having a diameter of 160 mm and a wall thickness of 7,7 mm (160x7,7 mm). As agent which influences the fracture behaviour use was made of a graft polymer of vinylchloride and acrylate (PVC-A).

The results were as follows:

| Acrylate wt.% | $N/mm^{3/2}$ (KiC) | Type of surface of fracture % ductile | Yield strength $N/mm^2$ |
|---|---|---|---|
| 0 | 4.4 - 4.7 | 50 - 70 | 50.4 |
| 0.5 | 4.5 | 50 - 60 | 49.6 |
| 1 | 4.3 - 4.5 | 80 | 49.0 |
| 1.5 | 4.4 | 80 - 85 | 48.1 |
| 2.5 | 4.1 - 4.3 | 100 | 46.2 |

In the above-mentioned table the percentages brittle and ductile have been determined visually. The brittle part shows a surface of fracture which is approximately undeformed, the ductile to the contrary shows a surface of fracture having flow phenomena.

It is observed that upon addition of PVC-A to PVC the fracture behaviour changes from substantially brittle to ductile. In the table a 100% ductile fracture is observed at 2,5 wt.% acrylate; in dependence of the additive used and other circumstances such as process conditions also at lower amounts a 100% ductile behaviour may be observed.

Also upon use of chlorinated polythene (CPE) as additive upon determination of the fracture behaviour results were obtained which are nearly identical to the results which have been shown in the table above.

## Claims

1. Use of a tube made of a thermoplastic material on the basis of a vinylchloride polymer for transport of a pressurised liquid or gaseous medium, whereby to the plastic, in addition to optional other conventional additives 0,3-4 wt.% of an agent which influences the fracture behaviour is added by which the fracture behaviour upon determination of the fracture toughness of the finished tube is substantially ductile in comparison to the fracture behaviour of an identical tube made of the same plastic to which said agent has not been added and whereby the finished tube shows a substantially brittle fracture behaviour whereby the agent with which the fracture toughness has been increased has been chosen from the group of agents which improve notched impact strength, such as chlorinated polyethylene, chlorinated polyethylene-vinyl chloride graft polymers, ethylene-vinyl acetate copolymers, ethylene-vinyl acetate/vinyl chloride graft copolymers, polyacrylic acid ester/vinyl chloride graft polymers, acrylic ester/methyl methacrylate graft polymers, methyl methacrylate-butadiene-styrene graft polymers, acrylonitrile-butadiene-styrene terpolymers.

2. Use according to claim 1, **characterised in that** to the plastics 0,5-1 wt.% of an agent which influences the fracture behaviour is added.

3. Use according to claim 1, **characterised in that** to the plastics 1-3 wt.% of an agent which influences the fracture behaviour is added.

4. Pressure pipe for transporting pressurised media which pipe has been manufactured from plastics tube of thermoplastic material on the basis of a vinylchloride polymer, **characterised in that** to the plastic in addition to other optional conventional additives 0,3-4 wt.% of an agent which influences the fracture behaviour is added by which the fracture behaviour, upon determination of the fracture toughness of the finished tube, is substantially dustile in comparison to the fracture behaviour of an identical tube made from the same plastic to which said agent has not been added and whereby the finished tube shows a substantially brittle fracture behaviour. whereby the agent with which the fracture toughness has been increased has been chosen from the group of agents which improve notched impact strength, such as chlorinated polyethylene, chlorinated polyethylene-vinyl chloride graft polymers, ethylene-vinyl acetate copolymers, ethylene-vinyl acetate/vinyl chloride graft copolymers, polyacrylic acid ester/vinyl chloride graft polymers, acrylic ester/methyl methacrylate graft polymers, methyl methacrylate-butadiene-styrene graft polymers, acrylonitrile - butadiene-styren terpolymers.

5. Pressure pipe according to claim 4, **characterised in that** to the plastic 0,5-1 wt.% of an agent which influences the fracture behaviour is added.

6. Pressure pipe according to claim 4, **characterised in that** to the plastic 1-3wt.% of an agent influences the fracture behaviour is added.

7. Tube of plastic on the basis of a vinylchloride polymer to be used in a pressure pipe according to any of the claims 4, 5 or 6. and having a composition as indicated in said Claims.


## Patentansprüche

1. Verwendung eines Rohres aus einem thermoplastichen Material auf der Basis eines Vinylchloridpolymeren zum Fördern eines flüssigen oder gasförmigen Druckmediums, wobei dem Kunststoff, zusätzlich zu optionalen anderen herkömmlichen Additiven, 0,3-4 Gew.-% eines Mittels, das das Bruchverhalten beeinflußt, zugesetzt ist, wodurch das Bruchverhalten bei Bestimmung der Bruchzähigkeit des fertigen Rohres im wesentlichen zäh ist im Vergleich zu dem Bruchverhalten eines identischen Rohres aus dem gleichen Kunststoff, dem das Mittel nicht zugesetzt werden ist und wobei das fertige Rohr ein im wesentlichen sprödes Bruchverhalten zeigt, wobei das Mittel, mit dem die Bruchzähigkeit erhöht worden ist, aus der Gruppe von Mitteln ausgewählt ist, die die Kerbschlagfestigkeit verbessern, wie chloriertes Polyethylen, chlorierte Polyethylen-vinylchlorid-Propfpolymere, Ethylenvinylacetat-Co-polymere, Ethylenvinylacetat/Vinylchlorid-Propf-Co-polymere, Polyacrylsäureester/Vinylchlorid-Propfpolymere, Acrylester/Methylmethacrylat-Propfpolymere, Methylmethacrylat-Butadien-Styrol-Propfpolymere, Acrylonitril-Butadien-Styrol-Terpolymere.

**2.** Verwendung nach Anspruch 1, dadurch gekennzeichnet, daß dem Kunststoff 0,5 bis 1 Gew.-% eines Mittels, das das Bruchverhalten beeinflußt, zugesetzt ist.

**3.** Verwnedung nach Anspruch 1, dadurch gekennzeichnet, daß dem Kunststoff 1 bis 3 Gew.-% eines Mittels, das das Bruchverhalten beeinflußt, zugesetzt ist.

**4.** Druckleitung zum Förden von Druckmedien, welche Leitung aus Kunststoffrohr aus thermoplastichem Material auf der Basis eines Vinylchloridpolymeren hergestellt ist, dadurch gekennzeichnet, daß dem Kunststoff zusätzlich zu anderen optionalen herkömmlichen Additiven 0,3 bis 4 Gew.-% eines Mittels, das das Bruchverhalten beeinflußt, zugesetzt ist, wodurch das Bruchverhalten, bei Bestimmung der Bruchzähigkeit des fertigen Rohres, im wesentlichen zäh ist im Vergleich zu dem Bruchverhalten eines identischen Rohres aus dem gleichen Kunststoff, dem das Mittel nicht zugesetzt worden ist und wobei das fertige Rohr ein im wesentlichen sprödes Bruchverhalten zeigt, wobei das Mittel, mit dem die Bruchzähigkeit erhöht worden ist, aus der Gruppe von Mitteln ausgewählt ist, die die Kerbschlagfestigkeit verbessern, wie chloriertes Polyethylen, chlorierte Polyethylenvinylchlorid-Propfpolymere, Ethylenvinylacetat-Copolymere, Ethylenvinylacetat/Vinylchlorid-Propfcopolymere, Polyacrylsäureester/Vinylchlorid-Propfpolymere, Acrylester-Methylmethacrylat-Propfpolymere, Methylmethacrylat-Butadien-Styrol-Propfpolymere, Acrylonitril-Butadien-Styrol-Terpolymere.

**5.** Druckleitung nach Anspruch 4, dadurch gekennzeichnet, daß dem Kunststoff 0,5 bis 1 Gew.-% eines Mittels, das das Bruchverhalten beeinflußt, zugesetzt ist.

**6.** Druckleitung nach Anspruch 4, dadurch gekennzeichnet, daß dem Kunststoff 1 bis 3 Gew.-% eines Mittels, das das Bruchverhalten beeinflußt, zugesetzt ist.

**7.** Rohr aus Kunststoff auf der Basis eines Vinylchloridpolymeren zur Verwendung in einer Druckleitung nach einem der Ansprüche 4, 5 oder 6 und mit einer Zusammensetzung, wie in diesem Ansprüchen angegeben.

## Revendications

**1.** Utilisation d'un tube fait d'une matière thermoplastique à base d'un polymère de chlorure de vinyle pour le transport d'un milieu liquide ou gazeux sous pression, matière plastique à laquelle, en plus des autres additifs facultatifs classiques, sont ajoutés 0,3-4% en poids d'un agent qui influence le comportement à la rupture, par lesquels le comportement à la rupture, lors de la détermination de la résistance à la rupture du tube fini, est essentiellement un comportement de ductilité, par comparaison avec le comportement à la rupture d'un tube identique fait de la même matière plastique à laquelle ledit agent n'a pas été ajouté et ce par quoi le tube fini manifeste un comportement à la rupture essentiellement de fragilité, l'agent par lequel la résistance à la rupture a été accrue, ayant été choisi dans le groupe des agents qui améliorent la résistance au choc sur éprouvette entaillée, tels que le polyéthylène chloré, les polymères greffés polyéthylène chloré-chlorure de vinyle, les copolymères éthylène-acétate de vinyle, les copolymères greffés éthylène-acétate de vinyle/chlorure de vinyle, les polymères greffés poly(ester d'acide acrylique)/chlorure de vinyle, les polymères greffés ester acrylique/méthacrylate de méthyle, les polymères greffés méthacrylate de méthyle-butadiène-styrène, les terpolymères acrylonitrile-butadiène-styrène.

**2.** Utilisation selon la revendication 1, caractérisée par le fait qu'à la matière plastique, 0,5-1% en poids d'un agent qui influence le comportement à la rupture est ajouté.

**3.** Utilisation selon la revendication 1 caractérisée par le fait qu'à la matière plastique, 1-3% en poids d'un agent qui influence le comportement à la rupture sont ajoutés.

**4.** Canalisation résistant à la pression pour le transport de milieux sous pression, laquelle canalisation a été fabriquée à partir d'un tube en matière plastique, fait d'une matière thermoplastique à base d'un polymère de chlorure de vinyle, caractérisée par le fait qu'à la matière plastique, en plus d'autres additifs facultatifs classiques, 0,3-4% en poids d'un agent qui influence le comportement à la rupture sont ajoutés par lesquels le comportement à la rupture, lors de la détermination de la résistance à la rupture du tube fini, est essentiellement un comportement de ductilité, par comparaison avec le comportement à la rupture d'un tube identique fait de la même matière plastique à laquelle ledit agent n'a pas été ajouté et ce par quoi le tube fini manfieste un comportement à la rupture essentiellement de fragilité, l'agent par lequel la résistance à la rupture a été accrue, ayant été choisi dans le groupe des agents qui améliorent la résistance au choc sur éprouvette entaillée, tels que le polyéthylène chloré, les polymères greffés polyéthylène chloré-chlorure de vinyle, les copolymères éthylène-acétate de vinyle, les copolymères greffés éthylène-acétate de vinyle/chlorure de vinyle, les polymères greffés poly(ester d'acide acrylique)/chlorure de vinyle, les polymères greffés ester acrylique/méthacrylate de méthyle, les polymères greffés méthacrylate de méthyle-butadiène-styrène, les terpolymères acrylonitrile-butadiène-styrène.

5. Canalisation résistant à la pression selon la revendication 4, caractérisée par le fait qu'à la matière plastique, 0,5-1% en poids d'un agent qui influence le comportement à la rupture est ajouté.

6. Canalisation résistant à la pression selon la revendication 4, caractérisée par le fait qu'à la matière plastique, 1-3% en poids d'un agent qui influence le comportement à la rupture sont ajoutés.

7. Tube de matière plastique à base d'un polymère de chlorure de vinyle, pour utilisation dans une canalisation résistant à la pression telle que définie à l'une quelconque des revendications 4, 5 ou 6 et ayant une composition telle qu'indiquée dans lesdites revendications.